# DEMANDE DE BREVET EUROPEEN

(11) **EP 1 355 141 A2**
(43) Date de publication de la demande: **22.10.2003**
(21) Numéro de dépôt: 03290840.2
(22) Date de dépôt: 04.04.2003
(51) Int. Cl.: G01M 11/02

(54) **Dispositif de mesure et de compensation dynamiques des variations de perte de puissance dans une ligne de transmission optique à canal de supervision, et procédé associé**

(30) Priorité: 08.04.2002 FR 0204343
(71) Demandeur: ALCATEL, 75008 Paris (FR)
(72) Inventeur: Bisson, Arnaud, Ilot des Cours - Bât. C, 91400 Orsay (FR); Michaud, Alice, 75013 Paris (FR); Rossi, Emmanuel, 75014 Paris (FR); Balland, Guy, 91700 Ste Genevieve des Bois (FR)
(74) Mandataire: Sciaux, Edmond

(57) **Abrégé**

Ce dispositif optique est destiné à la mesure et à la compensation dynamiques des variations de perte de puissance dans une fibre optique (2). Il comporte des moyens d'injection (4) agencés pour injecter des signaux de supervision présentant une puissance optique choisie en aval de l'entrée (E) de fibre, et des moyens de détection (5) agencés pour extraire les signaux de supervision à la sortie (S) de la fibre (2) afin de déterminer leur puissance optique, déduire de cette puissance et de la puissance optique choisie des informations primaires représentatives de la perte de puissance optique des signaux de supervision dans la fibre ; et pour comparer lesdites informations primaires à une valeur représentative de la perte de puissance optique nominale dans la fibre, de manière à délivrer des informations secondaires représentatives d'une variation de perte de puissance dans la fibre optique (2). Des moyens de contrôle (11) sont couplés aux moyens de détection (5) et à la sortie (S) de la fibre (2), et agencés, pour modifier la puissance des signaux primaires délivrés par la sortie de la fibre (2) en fonction de la variation de perte de puissance détectée.

## Description

L'invention concerne le domaine des dispositifs optiques, et plus particulièrement celui de la mesure et de la compensation de la perte de puissance dans les lignes de transmission de signaux optiques, équipées d'un canal de supervision dédié au transport d'informations binaires de gestion du réseau.

En raison de leurs composants (fibres optiques, amplificateurs, etc), les lignes de transmission optique introduisent des pertes de puissance qui nuisent aux performances de transmission et peuvent, dans certaines circonstances, entraîner des erreurs de traitement, voire même des pertes de données. Lors de l'installation de la ligne, on peut mesurer les pertes dites nominales de la fibre et ajuster des dispositifs de réglage permettant de compenser statiquement ces pertes. Mais les pertes varient ensuite au cours du temps. Ces variations des pertes de puissance optique sont généralement liées au vieillissement des composants et/ou aux interventions de maintenance ou de réparation.

Afin de suivre l'évolution de ces pertes de puissance, il a été proposé de mesurer périodiquement la puissance optique (de sortie) des signaux optiques (primaires) en sortie des fibres optiques. Or, ce type de mesure n'est pas discriminant puisqu'il ne permet pas de différencier une perte introduite par une fibre optique d'une perte introduite par un amplificateur optique qui alimente la fibre en signaux primaires. Le document **US 2001/0050807** décrit un procédé pour déterminer les pertes dans une ligne de transmission optique comportant une fibre utilisée à la fois pour la transmission et pour l'amplification d'un signal optique, par effet Raman. Une source de pompage optique permet cette amplification. Ce document propose de commuter la source de pompage pour comparer la puissance du signal reçu avec pompage et la puissance du signal reçu sans pompage et en déduire les pertes de la fibre.

Dans les lignes équipées d'un canal de supervision, il serait en théoriquement possible de mesurer la puissance optique (d'entrée) des signaux primaires à transmettre, et de transmettre dans le canal de supervision une information représentative de cette mesure à l'aide de signaux de supervision, de sorte que la puissance d'entrée puisse être comparée à la puissance optique de sortie. Mais, ce type de détection serait compliqué à mettre en oeuvre, et surtout requerrait un temps de traitement inadapté à une procédure d'ajustement dynamique de la puissance optique.

Le document **JP 0827 1380** décrit un procédé consistant à transmettre un signal de supervision et une information décrivant ce signal de supervision tel qu'il est avant sa transmission. Ce procédé a donc pour inconvénient de nécessiter une transmission d'une information décrivant ce signal de supervision.

Il est non seulement souhaitable de mesurer dynamiquement les variations des pertes causées par une fibre de transmission, mais il est souhaitable aussi de compenser dynamiquement l'effet des variations de ces pertes sur les signaux primaires. L'invention a donc pour but de proposer un procédé permettant de mesurer dynamiquement les variations de ces pertes et de compenser dynamiquement leur effet.

Elle propose un dispositif optique de mesure et de compensation dynamiques des variations perte de puissance dans une ligne de transmission optique comprenant des moyens d'injection de signaux optiques de supervision et au moins une fibre optique munie d'une entrée, pouvant recevoir des signaux optiques primaires et les signaux optiques de supervision, et d'une sortie pouvant délivrer ces signaux primaires et de supervision. Ces moyens d'injection sont agencés de manière à injecter des signaux de supervision qui présentent une puissance optique choisie (de préférence constante), Le dispositif de mesure comprend des moyens de détection capables, d'une part, d'extraire les signaux de supervision à la sortie de la fibre pour déterminer leur puissance optique et déduire de cette puissance et de la puissance optique choisie des informations primaires représentatives de la perte de puissance optique des signaux de supervision dans la fibre, et d'autre part, de comparer les informations primaires à une valeur représentative d'une perte de puissance nominale (des signaux de supervision) dans la fibre, de manière à délivrer des informations secondaires représentatives d'une variation de perte de puissance dans la fibre optique.

On entend ici par « puissance d'entrée » et « puissance de sortie » respectivement les puissances optiques des signaux (d'entrée) qui pénètrent dans la fibre par son entrée et des signaux (de sortie) qui débouchent de la fibre par sa sortie.

Selon l'invention, le dispositif de mesure et de compensation est caractérisé en ce qu'il comporte des moyens de contrôle couplés aux moyens de détection et à la sortie de la fibre, et capables, en cas de détection d'une variation de perte de puissance des signaux de supervision dans la fibre, de modifier la puissance des signaux délivrés par la sortie de la fibre en fonction de la variation détectée.

Ainsi, en cas de variation (augmentation) de perte de puissance des signaux de supervision dans la fibre, le dispositif peut effectuer un ajustement dynamique de la puissance de sortie des signaux de manière à la maintenir sensiblement constante par rapport à une valeur nominale.

Avantageusement, les moyens de contrôle peuvent comprendre un atténuateur optique variable (ou « VOA ») couplé à la sortie de la fibre, en amont des moyens de détection. Ce VOA atténuant la puissance des signaux primaires en sortie de la fibre, les moyens de comparaison peuvent leur demander de réduire ladite atténuation en cas de détection d'une variation (augmentation) de perte de puissance dans la fibre.

Préférentiellement, les moyens de détection comprennent un filtre optique pour l'extraction des signaux de supervision, un circuit électronique couplé au filtre et propre à délivrer les informations primaires et des moyens de comparaison agencés pour comparer les informations primaires à la valeur représentative de la perte de puissance nominale, de manière à délivrer les informations secondaires.

Le dispositif peut également comporter des moyens de détection auxiliaires destinés à :
i) extraire les signaux de supervision en amont d'un dispositif optique auxiliaire (tel qu'un multiplexeur à insertion ou extraction de longueurs d'onde), installé sur la fibre optique entre ses entrée et sortie, afin de déterminer leur puissance et déduire de cette puissance, de la puissance optique choisie (nominale), et des pertes nominales dans la partie de la fibre située en amont du dispositif auxiliaire, des informations représentatives de la perte de puissance optique des signaux de supervision dans ladite partie amont de la fibre,
ii) et injecter de nouveaux signaux de supervision en aval du dispositif auxiliaire calés sur la puissance détectée des signaux de supervision extraits, après avoir éventuellement retranché de leur puissance optique une valeur sensiblement égale à la perte de puissance nominale introduite par le dispositif auxiliaire.

Cela permet avantageusement de déterminer si la variation de perte de puissance s'est produite en amont ou en aval du dispositif auxiliaire.

L'invention propose également une installation de transmission de signaux optiques véhiculant des données, comprenant une ligne de transmission optique constituée d'une multiplicité de fibres optiques, raccordées par des amplificateurs optiques délivrant chacun des signaux primaires et couplées à des dispositifs de mesure et de compensation du type de celui décrit ci-avant.

L'invention propose en outre un procédé de mesure et de compensation dynamiques des variations de perte de puissance dans une ligne de transmission optique comprenant au moins une fibre optique comportant une entrée propre à recevoir des signaux optiques primaires et des signaux optiques de supervision et une sortie pour délivrer lesdits signaux primaires et de supervision ; ce procédé consistant à :
- injecter les signaux de supervision dans la fibre sous une puissance optique choisie (de préférence constante),
- puis à extraire ces signaux de supervision en sortie de la fibre pour :
   -- déterminer leur puissance et déduire de cette puissance et de la puissance optique choisie des informations primaires représentatives de la perte de puissance optique des signaux de supervision dans la fibre,
   -- comparer les informations primaires à une valeur représentative d'une perte de puissance nominale dans la fibre, de manière à délivrer des informations secondaires représentatives d'une variation de perte de puissance dans la fibre optique.
et étant **caractérisé en ce que**, en cas de détection d'une variation de perte de puissance des signaux de supervision, le procédé consiste à modifier la puissance des signaux délivrés en sortie de la fibre, en fonction de la variation détectée.

Préférentiellement, les informations secondaires délivrées sont représentatives de l'écart entre les informations primaires et la valeur choisie (nominale). Par exemple, ces informations secondaires sont représentatives de l'amplitude de l'écart, ou bien elles sont à deux états, un premier état étant associé à un écart positif entre les informations primaires et la valeur choisie, et un second état étant associé à un écart négatif ou nul entre les informations primaires et la valeur choisie.

Par ailleurs, lorsque l'on est en présence d'un dispositif optique auxiliaire installé sur la fibre entre ses entrée et sortie,
i) on extrait de préférence les signaux de supervision en amont de ce dispositif auxiliaire afin de déterminer leur puissance optique et déduire de cette puissance, de la puissance optique choisie (nominale) et des pertes nominales dans la partie de la fibre située en amont du dispositif auxiliaire, des informations représentatives de la perte de puissance optique des signaux de supervision dans la partie amont de la fibre,
et ii) on injecte de nouveaux signaux de supervision en aval du dispositif auxiliaire, calés sur la puissance détectée des signaux de supervision extraits, après avoir éventuellement retranché de leur puissance optique une valeur sensiblement égale à la perte de puissance nominale introduite par le dispositif auxiliaire.

Le dispositif, l'installation et le procédé selon l'invention sont tout particulièrement adaptés, bien que de façon non exclusive, à la mesure et compensation dynamiques des pertes de puissance sur les lignes de transmission optique utilisées dans le domaine des télécommunications, notamment lorsque lesdites lignes transportent des canaux de données multiplexés en longueur d'onde (ou « WDM » pour Wavelength-Division Multiplexing).

D'autres caractéristiques et avantages de l'invention apparaîtront à l'examen de la description détaillée ci-après, et des dessins annexés, sur lesquels :
- la figure 1 illustre de façon schématique un premier exemple de réalisation d'un dispositif optique selon l'invention,
- la figure 2 illustre de façon schématique un second exemple de réalisation d'un dispositif optique selon l'invention.

Les dessins annexés sont, pour l'essentiel, de caractère certain. En conséquence, ils pourront non seulement servir à compléter l'invention, mais aussi contribuer à sa définition, le cas échéant.

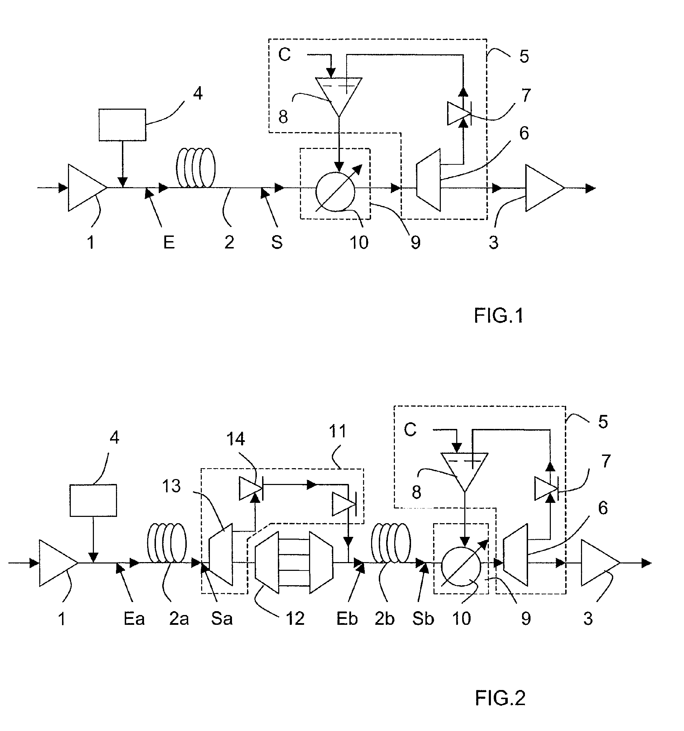

On se réfère tout d'abord à la **figure 1** pour décrire un premier exemple de réalisation d'un dispositif selon l'invention implanté sur une portion d'une ligne de transmission optique. Cette portion est constituée d'un premier amplificateur optique 1 (ou amplificateur d'entrée) raccordé à l'entrée E d'une fibre optique 2, pour lui délivrer des signaux optiques primaires, représentatifs de données à transmettre, par exemple sous la forme d'agrégats multiplexés en longueurs d'onde (ou agrégats WDM). Dans l'exemple illustré, la sortie S de la fibre 2 est couplée à un second amplificateur optique 3 (ou amplificateur de sortie), raccordé à une autre portion de la ligne de transmission. Par ailleurs, la fibre optique 2 présente une perte de puissance nominale connue.

Le dispositif selon l'invention comporte tout d'abord un module de supervision 4 raccordé à la sortie de l'amplificateur d'entrée 1, par exemple à l'aide d'un coupleur optique, et délivrant des signaux de supervision présentant une puissance optique choisie (ou nominale), de préférence constante. Ces signaux de supervision sont émis sur une fréquence spécifique qui leur est réservée. Ils occupent par conséquent un canal de supervision, dédié.

Les signaux primaires et les signaux de supervision circulent dans la fibre 2 jusqu'à sa sortie S où ils parviennent avec une puissance optique dite « de sortie ».

Le dispositif comprend également un module de détection 5, placé en aval de la sortie S de la fibre 2, mais en amont de l'amplificateur de sortie 3. Ce module est destiné à extraire les signaux de supervision qui sortent de la fibre 2 pour en déduire, notamment, des informations primaires représentatives de leur puissance optique de sortie. Plus précisément, le module de détection 5 comporte un démultiplexeur 6 destiné à n'extraire des signaux qui transitent entre la sortie S de la fibre 2 et l'amplificateur de sortie 3 que les signaux de supervision (placés dans le canal dédié). Ces signaux de supervision alimentent un circuit électronique 7, à photodiode, destiné à mesurer leur puissance moyenne de sortie. Ce circuit électronique 7 connaissant la puissance nominale des signaux de supervision, il peut donc en déduire la perte de puissance réellement introduite par la fibre 2. Il délivre par conséquent des informations primaires qui sont non seulement représentatives de la puissance moyenne des signaux de supervision, mais également de la perte de puissance réellement introduite par la fibre 2.

Le module de détection 5 comprend également un comparateur 8, alimenté en informations primaires par le circuit électronique 7. Ce comparateur 8 est destiné à comparer les informations primaires à une consigne C qui est représentative de la perte de puissance optique nominale des signaux de supervision.

Préférentiellement, les informations primaires et la consigne C alimentent respectivement des entrées non-inverseuse (+) et inverseuse (-) du comparateur 10. La consigne C permet donc au comparateur 10 d'estimer la différence (ou l'écart) entre la perte nominale de la fibre 2 et la perte réellement introduite par cette fibre.

Le comparateur 10 reçoit donc les informations primaires, les compare à la consigne C et délivre des informations secondaires représentatives de l'écart entre les informations primaires et C, ou en d'autres termes représentatives d'une variation de la perte de puissance dans la fibre 2 par rapport à une valeur nominale. Ces informations secondaires peuvent être soit directement représentatives de l'amplitude de l'écart mesuré, soit à deux états, un premier état, par exemple « haut », étant associé à un écart positif, et un second état, par exemple « bas », étant associé à un écart négatif ou nul.

Le dispositif selon l'invention peut également assurer l'ajustement de la puissance en sortie S de la fibre 2. Lorsque c'est le cas, comme illustré sur la figure 1, il comprend un module de contrôle 9 comportant un dispositif 10 capable de modifier la puissance des signaux primaires et de supervision avant qu'ils ne parviennent au démultiplexeur 6, et donc à l'amplificateur de sortie 3. Ce dispositif 10 est, par exemple, un atténuateur optique variable, plus connu sous l'acronyme anglais VOA (pour « Variable Optical Attenuator »). Il est placé en sortie de la fibre 2 et en amont de l'entrée du circuit de détection 5. Par conséquent, les signaux de supervision qui sont prélevés par le démultiplexeur 6 du circuit de détection 5 font préalablement l'objet d'une atténuation par le VOA 10, de sorte qu'en cas de détection d'une variation (augmentation) de la perte de puissance dans la fibre 2, le module de contrôle 9 puisse ordonner audit VOA 10 de réduire l'atténuation (ou de compenser l'augmentation de perte dans la fibre), ce qui équivaut à amplifier les signaux modulés de sorte qu'ils retrouvent leur puissance de sortie nominale.

Ainsi, lorsque le comparateur 8 délivre au module de contrôle 9 des informations secondaires placées, par exemple, dans l'état haut, ce dernier ordonne au VOA 10 de réduire l'atténuation d'une valeur choisie. Par exemple, cette valeur choisie est sensiblement égale à 3 dB. En variante, lorsque les informations secondaires représentent l'amplitude de l'écart entre la perte nominale de la fibre (C) et sa perte réelle, le module de contrôle 9 ordonne au VOA 10 de réduire l'atténuation d'une valeur sensiblement égale à l'écart.

Ainsi, seule une variation de perte de puissance introduite par la fibre 2 entraîne un ajustement automatique de l'atténuation.

On se réfère maintenant à la **figure 2** pour décrire un second exemple de réalisation du dispositif selon l'invention. Ce second exemple de réalisation est adapté à une ligne de transmission dans laquelle la fibre est subdivisée en deux parties 2a et 2b « raccordées » par un dispositif optique auxiliaire 12. Cet exemple reprend l'intégralité des éléments constituant le premier exemple de réalisation, mais comporte en plus un module d'extraction auxiliaire 11 permettant de déterminer si une perte de puissance additionnelle a été introduite dans la première 2a ou la seconde 2b partie de la fibre.

Dans l'exemple illustré le dispositif auxiliaire 12 est réalisé sous la forme d'un multiplexeur à insertion ou extraction de longueurs d'onde, de type OADM (« Optical Add and Drop Multiplexer »).

Le module d'extraction 11 comporte, dans cet exemple, un filtre (ou un coupleur) 13 placé en aval de la sortie Sa de la première portion 2a de fibre, mais en amont de l'OADM 12, et destiné à n'extraire que les signaux de supervision placés dans le canal dédié.

Le filtre 11 délivre les signaux de supervision extraits à un circuit électronique 14, à photodiodes, destiné à mesurer, notamment, leur puissance. Ce circuit 14 permet également, avantageusement, d'analyser les informations de gestion du réseau contenues dans les signaux de supervision. Une fois la puissance mesurée, elle est comparée à la valeur qu'elle devrait prendre normalement, compte tenu de la puissance nominale des signaux de supervision délivrés par le module de supervision 4 et des pertes nominales introduites par la première partie 2a de la fibre, afin de déterminer une éventuelle variation de perte de puissance dans la première partie 2a de la fibre.

Les signaux de supervision sont alors régénérés, si bien que ce sont de nouveaux signaux de supervision qui sont injectés par le circuit 14 en aval du dispositif auxiliaire, avec une puissance sensiblement identique à la puissance détectée des signaux de supervision extraits (issus de la première partie 2a de la fibre). On peut éventuellement retrancher de la puissance optique des nouveaux signaux de supervision une valeur sensiblement égale à la perte de puissance nominale introduite par l'OADM 12, avant de les injecter dans l'entrée Eb de la seconde partie 2b de la fibre, à l'aide d'un coupleur ou d'un filtre optique.

Bien entendu, les circuits de modulation, de détection, d'extraction et de contrôle présentés ci-avant ne sont donnés qu'à titre d'exemple illustratif et peuvent faire l'objet de très nombreuses variantes et adaptations.

L'invention offre également un procédé de mesure dynamique de perte de puissance dans une ligne de transmission optique comprenant au moins une fibre optique dont l'entrée E peut recevoir des signaux optiques primaires et des signaux optiques de supervision et la sortie S peut délivrer lesdits signaux primaires et de supervision.

Celui-ci peut être mis en oeuvre à l'aide du dispositif et de l'installation présentés ci-avant. Les fonctions et sous-fonctions principales et optionnelles assurées par les étapes de ce procédé étant sensiblement identiques à celles assurées par les différents moyens constituants le dispositif, seules seront résumées ci-après les étapes mettant en oeuvre les fonctions principales du procédé selon l'invention.

Ce procédé comporte une première étape dans laquelle on injecte les signaux de supervision dans la fibre 2 sous une puissance optique choisie (ou nominale), de préférence constante, et une seconde étape dans laquelle on extrait les signaux de supervision en sortie de la fibre pour, d'une part, déterminer leur puissance optique et déduire de cette puissance et de la puissance optique choisie des informations primaires représentatives de la perte de puissance optique des signaux de supervision dans la fibre, et d'autre part, comparer les informations primaires à une valeur représentative d'une perte de puissance nominale dans la fibre, de manière à délivrer des informations secondaires représentatives d'une variation de perte de puissance dans ladite fibre optique.

Le procédé comporte une étape complémentaire d'ajustement (ou de régulation) dans laquelle, en cas de détection d'une variation de perte de puissance (non autorisée) introduite par la fibre 2, on modifie la puissance des signaux délivrés par la sortie S de la fibre 2 en fonction de cette variation détectée.

L'invention ne se limite pas aux modes de réalisation de dispositif, installation et procédé décrits ci-avant, seulement à titre d'exemple, mais elle englobe toutes les variantes que pourra envisager l'homme de l'art dans le cadre des revendications ci-après.

## Revendications

1. Dispositif optique de mesure et de compensation dynamiques des variations de perte de puissance dans une ligne de transmission optique comprenant :
- des moyens d'injection de signaux optiques de supervision (4) dans cette ligne qui comprend au moins une fibre optique (2) comportant une entrée (E), propre à recevoir des signaux optiques primaires et lesdits signaux optiques de supervision, et une sortie (S) pour délivrer lesdits signaux primaires et de supervision ; lesdits moyens d'injection (4) étant agencés pour injecter des signaux de supervision présentant une puissance optique choisie ;
- des moyens de détection (5) agencés pour :
-- extraire lesdits signaux de supervision à la sortie (S) de la fibre (2) afin de déterminer leur puissance optique et déduire de cette puissance et de ladite puissance optique choisie des informations primaires représentatives de la perte de puissance optique des signaux de supervision dans la fibre (2),
-- et comparer lesdites informations primaires à une valeur représentative d'une perte de puissance nominale dans la fibre, de manière à délivrer des informations secondaires représentatives d'une variation de perte de puissance dans ladite fibre optique ;
**caractérisé en ce qu'**il comprend en outre des moyens de contrôle (11) couplés auxdits moyens de détection (5) et à la sortie (S) de la fibre (2), et agencés, en cas de détection d'une variation de perte de puissance des signaux de supervision dans la fibre, pour modifier la puissance des signaux primaires délivrés par la sortie de la fibre (2) en fonction de ladite variation de perte de puissance détectée.

2. Dispositif selon la revendication 1, **caractérisé en ce que** lesdits moyens de détection (5) délivrent des informations secondaires représentatives de l'amplitude de l'écart entre lesdites informations primaires et ladite valeur.

3. Dispositif selon la revendication 1, **caractérisé en ce que** lesdits moyens de détection (5) délivrent des informations secondaires à deux états, un premier état étant associé à un écart positif entre lesdites informations primaires et ladite valeur, et un second état étant associé à un écart négatif ou nul entre lesdites informations primaires et ladite valeur.

4. Dispositif selon la revendication 1, **caractérisé en ce que** lesdits moyens de contrôle (11) comprennent un atténuateur optique variable (12) couplé à la sortie (S) de la fibre (2).

5. Dispositif selon la revendication 1, **caractérisé en ce que** lesdits moyens de détection (5) comprennent un filtre optique (6) pour extraire lesdits signaux de supervision, un circuit électronique (7) couplé audit filtre optique (6) et propre à délivrer lesdites informations primaires, et des moyens de comparaison (8) agencés pour comparer lesdites informations primaires à la valeur représentative de la perte de puissance nominale de manière à délivrer lesdites informations secondaires.

6. Dispositif selon la revendication 1, **caractérisé en ce qu'**il comprend des moyens de détection auxiliaires (11) agencés pour i) extraire lesdits signaux de supervision en amont d'un dispositif optique auxiliaire (12), installé sur ladite fibre optique (2) entre ses entrée (E) et sortie (S), afin de déterminer leur puissance optique et déduire de cette puissance, de ladite puissance optique choisie et des pertes nominales dans la partie de la fibre (2a) située en amont du dispositif auxiliaire (12), des informations représentatives de la perte de puissance optique des signaux de supervision dans ladite partie amont (2a) de la fibre, et ii) injecter de nouveaux signaux de supervision en aval du dispositif auxiliaire, calés sur la puissance détectée des signaux de supervision extraits.

7. Dispositif selon la revendication 6, **caractérisé en ce que** ledit dispositif auxiliaire (12) est un multiplexeur à insertion et/ou extraction de longueurs d'onde.

8. Installation de transmission de signaux optiques véhiculant des données, comprenant une ligne de transmission optique constituée d'une multiplicité de fibres optiques (2) raccordées par des amplificateurs optiques (1,3) délivrant chacun des signaux primaires, **caractérisée en ce que** chaque fibre optique (2) est couplée à un dispositif de mesure et de compensation dynamiques des variations de perte, selon l'une des revendications 1 à 7.

9. Procédé de mesure et de compensation dynamiques des variations de perte de puissance dans une ligne de transmission optique comprenant au moins une fibre optique (2) comportant une entrée (E), propre à recevoir des signaux optiques primaires et des signaux optiques de supervision, et une sortie (S) pour délivrer lesdits signaux primaires et de supervision, consistant à :
- injecter lesdits signaux de supervision dans ladite fibre (2) sous une puissance optique choisie,
- puis à extraire lesdits signaux de supervision en sortie de la fibre pour:
- déterminer leur puissance optique,
- déduire de cette puissance et de ladite puissance optique choisie des informations primaires représentatives de la perte de puissance optique des signaux de supervision dans la fibre (2),
- et comparer lesdites informations primaires à une valeur représentative d'une perte de puissance nominale dans la fibre, de manière à délivrer des informations secondaires représentatives d'une variation de perte de puissance dans ladite fibre optique (2) ;
**caractérisé en ce qu'**en cas de détection d'une variation de perte de puissance des signaux de supervision dans la fibre (2), il consiste en outre à modifier la puissance des signaux primaires délivrés par la sortie (S) de la fibre (2) en fonction de ladite variation détectée.

10. Procédé selon la revendication 9, **caractérisé en ce que** lesdites informations secondaires sont représentatives de l'écart entre lesdites informations primaires et ladite valeur.

11. Procédé selon la revendication 10, **caractérisé en ce que** l'on délivre des informations secondaires représentatives de l'amplitude dudit écart.

12. Procédé selon la revendication 10, **caractérisé en ce que** l'on délivre des informations secondaires à deux états, un premier état étant associé à un écart positif entre lesdites informations primaires et ladite valeur, et un second état étant associé à un écart négatif ou nul entre lesdites informations primaires et ladite valeur.

13. Procédé selon la revendication 9, **caractérisé en ce qu'**en présence d'un dispositif optique auxiliaire (12) installé sur ladite fibre (2) entre ses entrée (E) et sortie (S), il consiste à :
- extraire lesdits signaux de supervision en amont dudit dispositif auxiliaire (12) de manière à déterminer leur puissance optique et à déduire de cette puissance, de ladite puissance optique choisie, et des pertes nominales dans la partie de la fibre (2a) située en amont du dispositif auxiliaire (12), des informations représentatives de la perte de puissance optique des signaux de supervision dans ladite partie amont (2a) de la fibre,
- et injecter de nouveaux signaux de supervision en aval du dispositif auxiliaire, calés sur la puissance détectée des signaux de supervision extraits.
